# EUROPEAN PATENT SPECIFICATION

(11) **EP 4 287 379 B1**
(45) Date of publication and mention of the grant of the patent: **29.10.2025**
(21) Application number: 22912051.4
(22) Date of filing: 23.12.2022
(51) Int. Cl.: H01M 50/333, H01M 50/383, H01M 50/249, H01M 50/204

(54) **BATTERY MODULE**
BATTERIEMODUL
MODULE DE BATTERIE

(30) Priority: 24.12.2021 KR 20210187372
(43) Date of publication of application: 06.12.2023
(73) Proprietor: LG Energy Solution, Ltd., Seoul 07335 (KR)
(72) Inventor: PARK, Su-Bin, Daejeon 34122 (KR); KIM, Kwang-Mo, Daejeon 34122 (KR); SEONG, Jun-Yeob, Daejeon 34122 (KR); JUNG, Hye-Mi, Daejeon 34122 (KR)
(74) Representative: Plasseraud IP
(86) International application number: PCT/KR2022/021254
(87) International publication number: WO 2023/121418

(56) References cited:
- WO-A1-2022/112036
- CN-U- 212 011 077
- DE-A1- 102013 014 929
- JP-A- 2005 285 513
- JP-A- H11 339 746
- KR-A- 20070 103 890
- KR-A- 20160 112 768
- KR-A- 20170 135 469
- KR-A- 20210 004 189
- US-A1- 2017 098 807
- US-A1- 2021 320 375

## Description

### TECHNICAL FIELD

The present application claims priority to Korean Patent Application No. 10-2021-0187372 filed on December 24, 2021 in the Republic of Korea. The present disclosure relates to a battery module.

### BACKGROUND ART

Recently, with the rapid increase in demand for portable electronic products such as laptop computers, video cameras and mobile phones and the widespread use of robots and electric vehicles, many studies are being conducted on high performance secondary batteries that can be repeatedly recharged.

Currently, commercially available secondary batteries include nickel-cadmium batteries, nickel-hydrogen batteries, nickel-zinc batteries, lithium secondary batteries and the like. Among them, lithium secondary batteries have little or no memory effect, and are gaining more attention than nickel-based secondary batteries as recharging can be done whenever it is convenient. Further, lithium secondary batteries provide a low self-discharge rate with high energy density capability.

The lithium secondary batteries mainly use a lithium-based oxide and a carbon material as a positive electrode active material and a negative electrode active material, respectively. The lithium secondary batteries include an electrode assembly including a positive electrode plate and a negative electrode plate respectively coated with the positive electrode active material and the negative electrode active material and a separator interposed between the positive electrode plate and the negative electrode plate, and a hermetically sealed packaging or battery case in which the electrode assembly is received together with an electrolyte solution.

According to the shape of the battery case, lithium secondary batteries may be classified into can-type secondary batteries in which the electrode assembly is included in a metal can and pouch-type secondary batteries in which the electrode assembly is embedded in a pouch made of an aluminum laminate sheet.

Recently, secondary batteries are widely used for operation or energy storage in not only small devices such as mobile electronic devices but also medium- and large-scale devices such as electric vehicles or Energy Storage Systems (ESSs). A plurality of secondary batteries may be electrically connected to each other and received in a module case to form a battery module. In addition, a plurality of battery modules connected to each other may form a battery pack.

However, when the plurality of secondary batteries (battery cells) or the plurality of battery modules is packed in a narrow space, they may be vulnerable to a thermal event. In particular, when an event such as thermal runaway occurs in any of the battery cells, high temperature gas, flame or heat may be produced. When the gas, flame or heat is transferred to the other battery cell included in the same battery module, explosive chain reaction such as thermal propagation may occur. Additionally, the chain reaction may cause a fire or explosion in the corresponding battery module, and the fire or explosion may spread to the other battery module.

Moreover, since the battery packs for medium- and large-scale devices such as electric vehicles include a large number of battery cells and a large number of battery modules to increase the output and/or capacity, there are higher risks of thermal chain reaction. Further, in the case of the battery pack mounted on the electric vehicle, a user such as a driver exits. Accordingly, when the thermal event occurred in a certain battery module is not properly controlled, chain reaction occurs, causing human and economic loss and damage.

### DISCLOSURE

### Technical Problem

The present disclosure is designed to solve these and other problems.

The present disclosure is directed to providing a battery module for the release of heat release in case of a thermal event.

The present disclosure is further directed to providing a battery module for preventing fire debris or spark from going out of the battery module in case of a thermal event.

The present disclosure is further directed to providing a battery module having a structure for trapping fire debris or spark in case of a thermal event.

The present disclosure is further directed to providing a battery module for preventing the propagation of a thermal event.

In the prior art, document US 2021/1320473 A1 discloses a gas valve for a battery casing comprising a base body corresponding to a seating portion with a gas passage opening forming an outlet and comprises a membrane carrier on which is positioned a semipermeable membrane, said membrane carrier being movable from a first position to allow a small passage of gases to a second position to allow a large passage of gases. Document US 2017/098807 A1 discloses a valve for a battery casing provided to cover an air vent formed in a lid member of the battery casing. The valve has a cap at a position opposed to air vent. The cap has an exhaust hole through which gas inside casing is emitted, a reverse plate is housed in the cap. The reverse plate can take a first state where the exhaust hole is opened and a second state where the exhaust hole is closed. The valve comprises a coil spring housed in the cap biasing reverse plate 54 toward the air vent. Document DE 10 2013 014929 A1 discloses a valve for a battery casing, such valve comprising a conical cover pushed away from a circular seat when gases are accumulating in the battery casing. JP 2005 285513 discloses a sealed secondary battery. JP H11 339746 discloses a storage battery safety valve.

### Technical Solution

To achieve the above-described objective, a battery module according to the invention is defined in claims 1 and 2

To achieve the above-described objective, a battery pack according to the invention is defined in claim 3.

To achieve the above-described objective, a vehicle according to the invention is defined in claim 4.

### Advantageous Effects

According to at least one of the embodiments of the present disclosure, there may be provided the battery module for the release of heat release in case of a thermal event.

According to at least one of the embodiments of the present disclosure, there may be provided the battery module for preventing fire debris or spark from going out of the battery module in case of a thermal event.

According to the present disclosure, there is provided the battery module having a structure for trapping fire debris or spark in case of a thermal event.

According to at least one of the embodiments of the present disclosure, there may be provided the battery module for preventing the propagation of a thermal event.

### DESCRIPTION OF DRAWINGS

The accompanying drawings illustrate an exemplary embodiment of the present disclosure, and together with the following detailed description, serve to provide a further understanding of the technical aspect of the present disclosure, and thus, the present disclosure should not be construed as being limited to the drawings.
FIG. 1 is a perspective view showing a battery module according to an embodiment of the present disclosure.
FIG. 2 is a diagram showing some components of a battery module according to an embodiment of the present disclosure.
FIG. 3 is an exploded diagram showing some components of a gas valve of a battery module according to an embodiment of the present disclosure.
FIG. 4 is a partial cross-sectional view of FIG. 1, taken along the line A-A'.
FIG. 5 is a partial cross-sectional view of FIG. 1, taken along the line A-A', in open state of a gas valve of a battery module according to an embodiment of the present disclosure, not according to the invention.
FIG. 6 is a schematic diagram showing a variation of a cover of FIG. 5 not according to the invention.
FIG. 7 is a schematic diagram showing another variation of a cover of FIG. 5 not according to the invention.
FIG. 8 is a schematic diagram showing another variation of a cover of FIG. 5 according to the invention.
FIG. 9 is a schematic diagram showing another variation of a cover of FIG. 5 according to the invention.
FIG. 10 is a schematic diagram showing a variation of a spark pocket of FIG. 5 not according to the invention.
FIG. 11 is a schematic diagram showing another variation of a spark pocket of FIG. 5 not according to the invention.
FIG. 12 is a schematic diagram showing another variation of a spark pocket of FIG. 5 not according to the invention.
FIG. 13 is a schematic diagram showing a variation of a connection bar of FIG. 5.
FIG. 14 is a schematic diagram showing another variation of a connection bar of FIG. 5.
FIG. 15 is a schematic diagram showing another variation of a connection bar of FIG. 5.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made thereto at the time that the application was filed.

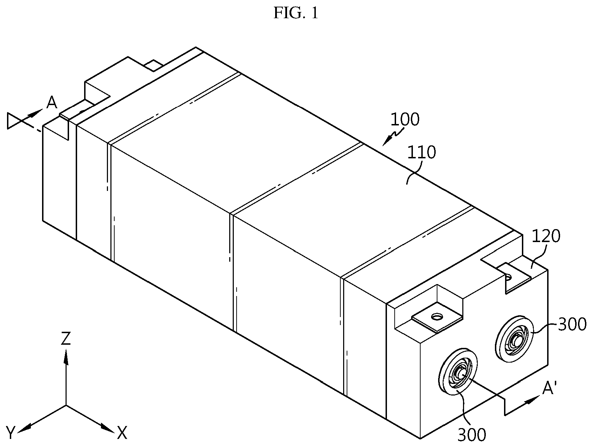

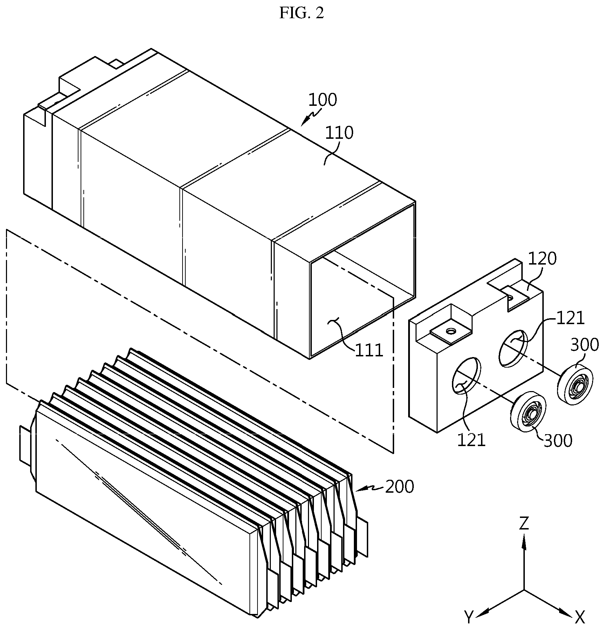

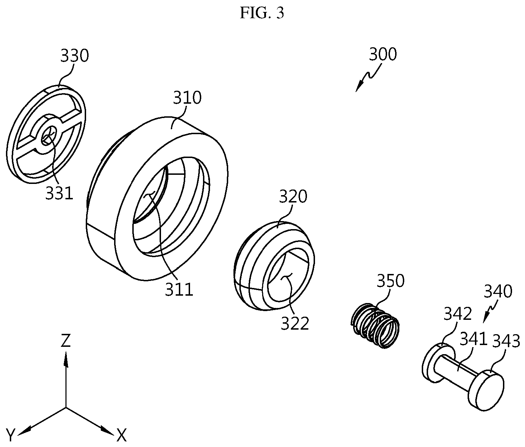

FIG. 1 is a perspective view showing a battery module according to an embodiment of the present disclosure. FIG. 2 is a diagram showing some components of the battery module according to an embodiment of the present disclosure. FIG. 3 is an exploded diagram showing some components of a gas valve 300 of the battery module according to an embodiment of the present disclosure. Referring to FIGS. 1 to 3, the battery module according to an embodiment of the present disclosure may include a case 100, a battery cell 200 and a gas valve 300.

The case 100 may include a frame 110 and a pair of end plates 120. The case 100 may refer collectively to the frame 110 and the end plates 120. The frame 110 may have a cuboidal shape. The frame 110 may be open to the front side and the rear side. The frame 110 may provide an internal space 111. Each of the end plates 120 may be coupled to each of the front and rear sides of the frame 110. The end plates 120 and the frame 110 may be coupled by welding. The end plates 120 may have openings 121. Each of the end plates 120 may have two openings 121. The case 100 including the frame 110 and the pair of end plates 120 may have the openings 121 on the front side and provide the internal space 111.

The battery cell 200 may be disposed in the internal space 111 of the case 100. A plurality of battery cells 200 may be included. Each of the plurality of battery cells 200 may include at least one electrode lead that protrudes forward or in +X-axis direction. Additionally, each of the plurality of battery cells 200 may have the other electrode lead that protrudes rearward or in -X-axis direction. The plurality of battery cells 200 may be stacked in the left-right direction. Alternatively, the plurality of battery cells 200 may be stacked in the Y-axis direction. The plurality of battery cells 200 may be pouch-type secondary batteries. The pouch-type secondary battery may include an electrode assembly and an electrolyte received in a pouch packaging. The pouch packaging may accommodate the electrode assembly and the electrolyte, and the edges of two pouches may be sealed. The pouch-type secondary battery may include a receiving portion at the center and a sealing portion around the receiving portion. The pouch-type secondary battery may have a rectangular shape with four edges, and three or four edges may be sealed.

The gas valve 300 may include a seating portion 310 and a cover 320. The seating portion 310 may be installed in the opening 121. The seating portion 310 may have an outlet 311. The cover 320 may be movable in the front-rear direction or X-axis direction. The outlet 311 may communicate the internal space 111 of the case 100 with the external environment. Additionally, the cover 320 may open and close the outlet 311. Additionally, the cover 320 may include a first part 323 of which diameter increases in a direction facing away from the outlet 311 or +X-axis direction. Alternatively, the cover 320 may include the first part 323 with the increasing diameter in cross section perpendicular to the direction facing away from the outlet 311 or +X-axis direction. The cover 320 may open the outlet 311 as it moves forward or to +X axis. Additionally, the cover 320 may close the outlet 311 as it moves rearward or to -X axis.

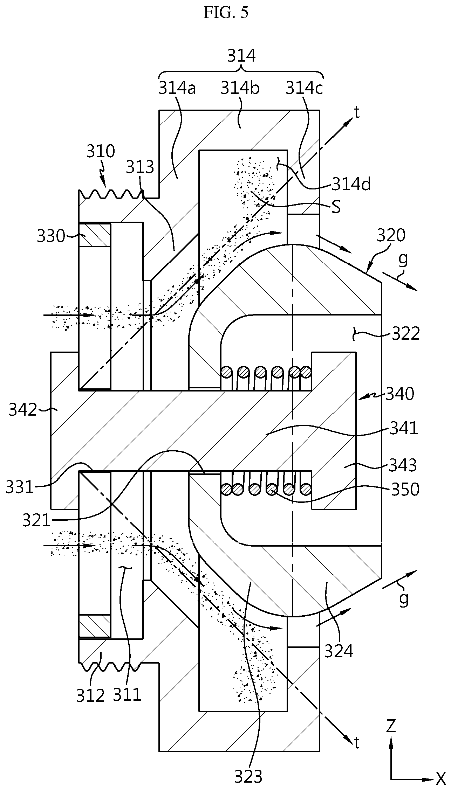

According to this configuration of the present disclosure, when a thermal event occurs in the battery module, the gas valve 300 may be opened. When the thermal event occurs, venting gas g (see FIG. 5), fire debris and spark s (see FIG. 5) produced from the battery cell 200 may push the cover 320 of the gas valve 300 forward or to +X axis, and the venting gas g, fire debris and the spark S may be vented through the outlet 311. In case where the venting gas g, fire debris and the spark S is not properly vented, chain explosion may occur in the plurality of battery cells 200 in the battery module. Accordingly, as the gas valve 300 is opened, it is possible to improve the thermal stability of the battery module.

Additionally, according to this configuration of the present disclosure, the venting gas g, the fire debris and the spark S may flow along the first part 323 of the cover 320. The high pressure venting gas g, the fire debris and the spark S may form a jet flow due to high flow rate, and may flow along the surface of the first part 323 of the cover 320. Accordingly, it is possible to cancel out the linearity of the venting gas g, the fire debris and the spark S.

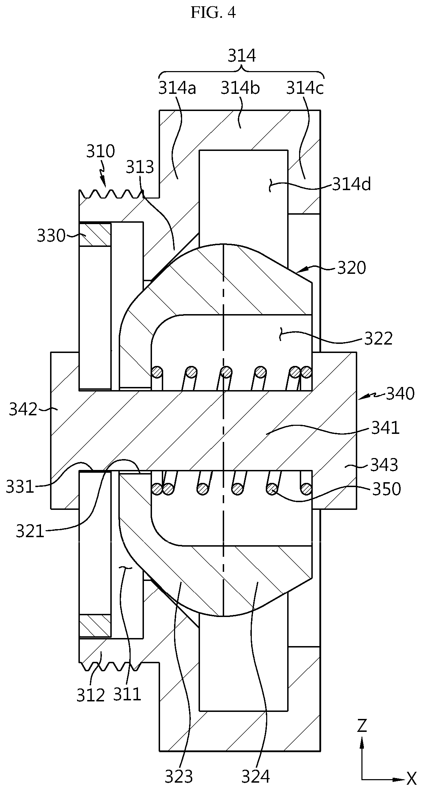

FIG. 4 is a partial cross-sectional view of FIG. 1, taken along the line A-A'. FIG. 5 is a partial cross-sectional view of FIG. 1, taken along the line A-A', in open state of the gas valve 300 of the battery module according to an embodiment of the present disclosure. Referring to FIGS. 3 to 5, the gas valve 300 of the battery module according to an embodiment of the present disclosure may include a spring 350 to provide the cover 320 with a restoring force to push the cover 320 backward.

The seating portion 310 may include a coupling portion 312 that protrudes rearward. The coupling portion 312 may have threads on the outer peripheral surface. Additionally, the opening 121 of the case 100 may have threads on the inner peripheral surface. The threads of the opening 121 of the case 100 and the threads of the coupling portion 312 of the seating portion 310 may be interlocked or engaged with each other.

A supporting portion 330 may be coupled to the inner side of the coupling portion 312. The supporting portion 330 may include a hole 331. A connection bar 340 may pass through the hole 331 of the supporting portion 330. The connection bar 340 may include a bar 341 extended in the front-rear direction or X-axis direction, a first fixing portion 342 on the rear side of the bar 341, and a second fixing portion 343 on the front side of the bar 341. The first fixing portion 342 of the connection bar 340 may have a larger diameter than the hole 331 of the supporting portion 330. The first fixing portion 342 may be secured, confined or supported by the hole 331 of the supporting portion 330.

The cover 320 may have a hole 321 on the rear side. The bar 341 may pass through the hole 321 of the cover 320. Additionally, the hole 321 of the cover 320 and the hole 331 of the supporting portion 330 may face each other. The cover 320 may provide an internal space 322. The internal space 322 of the cover 320 may be open to the front side. Additionally, the internal space 322 of the cover 320 may be in communication with the hole 321.

The spring 350 may be disposed in the internal space 322 of the cover 320. Additionally, the spring 350 may be coupled to the connection bar 340. Additionally, the spring 350 may be disposed between the second fixing portion 343 and the hole 321 of the cover 320. The rear side of the spring 350 may be supported by the cover 320 and the front side may be supported by the second fixing portion 343. The spring 350 may provide the restoring force that pushes the cover 320 backward.

The cover 320 may be coupled to the connection bar 340 movably along the bar 341 in the front-rear direction or X-axis direction. The seating portion 310 may include a supporting portion 313 extended to the front side of the coupling portion 312. The supporting portion 313 may be formed around the outlet 311. Additionally, the supporting portion 313 may support the first part 323 of the cover 320. The supporting portion 313 may be shaped to increase the diameter of the outlet 311 as it goes to +X axis or forward to conform to the shape of the first part 323. When the gas valve 300 is closed, the supporting portion 313 may come into contact with the first part 323. The first part 323 may press the supporting portion 313 by the restoring force of the spring 350. Accordingly, the internal space 111 of the battery module may be hermetically sealed. When the gas valve 300 is open, the supporting portion 313 may be separated from the first part 323. The moving position of the cover 320 in the front-rear direction may be limited by the supporting portion 313, the spring 350 and the second fixing portion 343.

According to this configuration of the present disclosure, when the pressure in the battery module rises, the cover 320 of the gas valve 300 opens the outlet 311, and when the pressure in the battery module decreases, the outlet 311 may be closed.

Additionally, according to this configuration of the present disclosure, the opening degree of the gas valve 300 may be limited by adjusting the restoring force of the spring 350. Accordingly, the position of the cover 320 may be controlled to optimally open the gas valve 300.

Referring to FIGS. 4 and 5, the cover 320 of the gas valve 300 of the battery module according to an embodiment of the present disclosure may include a second part 324 extended forward from the first part 323, and the second part 324 decreases in diameter as it faces away from the outlet 311.

The cover 320 may include the second part 324 of which diameter decreases in the direction facing away from the outlet 311 or +X-axis direction. Alternatively, the cover 320 may include the second part 324 with the decreasing diameter in cross section perpendicular to the direction facing away from the outlet 311 or +X-axis direction. The first part 323 and the second part 324 may be integrally formed. Accordingly, the cover 320 may increase and then decrease in diameter in the direction facing away from the outlet 311 or +X-axis direction. Alternatively, the curvature formed by the outer peripheral surface of the cover 320 may increase and then decrease in the direction facing away from the outlet 311 or +X-axis direction.

According to this configuration of the present disclosure, the shape of the cover 320 may produce the Coanda effect. The high pressure venting gas g, the fire debris and the spark S may form a jet flow due to high flow rate, and may flow along the shape of the cover 320. That is, the high pressure venting gas g, the fire debris and the spark S may change in flow direction along the curvature of the outer peripheral surface of the cover 320.

Additionally, according to this configuration of the present disclosure, the flow of the venting gas g and the flow of the fire debris and the spark S may be separated by the cover 320. Particles of the fire debris and the spark S may have greater mass than particles of the venting gas g. Accordingly, the fire debris and the spark S may flow along the first part 323 and may not flow along the second part 324. The fire debris and the spark S may flow in the tangent direction t of the first part 323 due to the inertia. **In** contrast, the venting gas g may flow along the first part 323 and then flow along the second part 324.

Additionally, according to this configuration of the present disclosure, the gas valve 300 may prevent the fire debris or the spark S from going out of the battery module. Accordingly, it is possible to reduce the fire or explosion risk outside of the module.

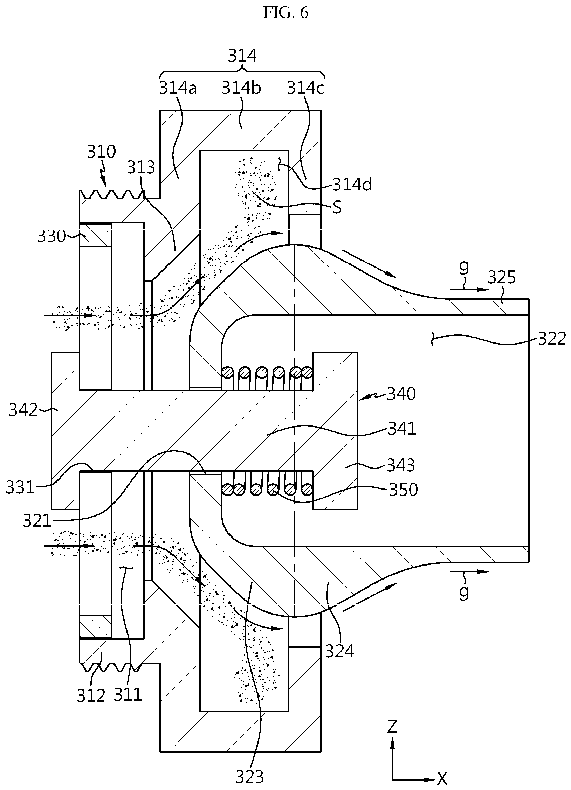

FIG. 6 is a schematic diagram showing a variation of the cover of FIG. 5. Referring to FIG. 6, the cover 320 of the battery module according to an embodiment of the present disclosure may further include a third part 325 extended forward from the second part 324 and the third part 325 has a uniform diameter.

The cover 320 may include the third part 325 having a uniform diameter in the direction facing away from the outlet 311 or +X-axis direction. Alternatively, the cover 320 may include the third part 325 having a uniform diameter in cross section perpendicular to the direction facing away from the outlet 311 or +X-axis direction. The first part 323, the second part 324 and the third part 325 may be integrally formed. Accordingly, the diameter of the cover 320 may increase, decrease and then uniformly stay in the direction facing away from the outlet 311 or +X-axis direction. Alternatively, the curvature formed by the outer peripheral surface of the cover 320 may increase, decrease and then uniformly stay in the direction facing away from the outlet 311 or +X-axis direction.

According to this configuration of the present disclosure, the shape of the cover 320 may produce the Coanda effect, and the flow of the venting gas g and the flow of the fire debris and the spark S may be separated by the cover 320. The separated flow of the venting gas g may flow along the third part 325, and exit in the direction parallel to the X axis. Accordingly, it may be easy to control the heat release of the battery module.

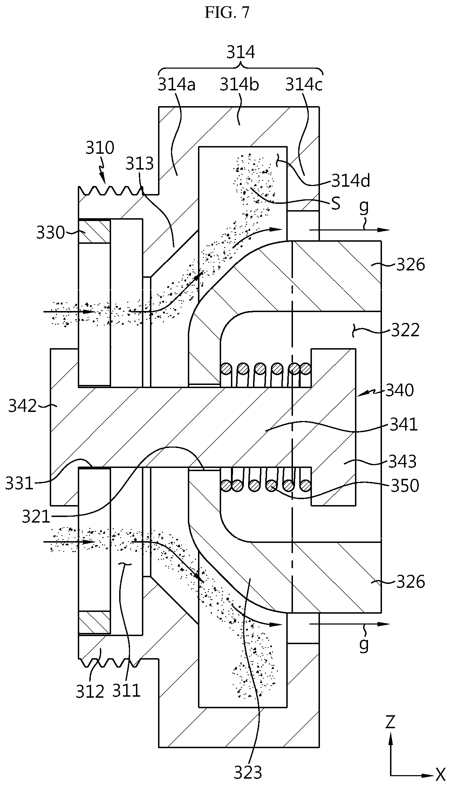

FIG. 7 is a schematic diagram showing another variation of the cover of FIG. 5. Referring to FIG. 7, the cover 320 of the battery module according to an embodiment of the present disclosure may further include a fourth part 326 extended forward from the first part 323, and the fourth part 326 has a uniform diameter.

The cover 320 may include the fourth part 326 having a uniform diameter in the direction facing away from the outlet 311 or +X-axis direction. Alternatively, the cover 320 may include the fourth part 326 having a uniform diameter in cross section perpendicular to the direction facing away from the outlet 311 or +X-axis direction. The first part 323 and the fourth part 326 may be integrally formed. Accordingly, the diameter of the cover 320 may increase and then uniformly stay in the direction facing away from the outlet 311 or +X-axis direction. Alternatively, the curvature formed by the outer peripheral surface of the cover 320 may increase and then uniformly stay in the direction facing away from the outlet 311 or +X-axis direction.

According to this configuration of the present disclosure, the shape of the cover 320 may produce the Coanda effect, and the flow of the venting gas g and the flow of the fire debris and the spark S may be separated by the cover 320. The separated flow of the venting gas g may flow along the fourth part 326, and exit in the direction parallel to the X axis. Accordingly, it may be easy to control the heat release of the battery module.

Referring to FIG. 5, the seating portion 310 of the battery module according to an embodiment of the present disclosure may include a spark pocket 314 configured to trap the particles moving along the surface of the first part 323.

The particles may refer to a material except the venting gas g in the materials produced due to the thermal event. Alternatively, the particles may refer to the fire debris or the spark S produced due to the thermal event. The spark pocket 314 may be disposed in front of the supporting portion 313. The coupling portion 312, the supporting portion 313 and the spark pocket 314 may be integrally formed. The spark pocket 314 may provide a trapping space 314d inside. When the gas valve 300 is open, the spark pocket 314 may have the trapping space 314d in the flow direction t of the fire debris and the spark S separated by the cover 320.

According to this configuration of the present disclosure, the fire debris and the spark S may be trapped in the trapping space 314d of the spark pocket 314. Accordingly, it is possible to prevent the fire debris and the spark S from going out of the battery module.

Referring to FIGS. 4 and 5, the spark pocket 314 of the battery module according to an embodiment of the present disclosure may be disposed around the outlet 311, and at least part of the spark pocket 314 may face the first part 323.

The spark pocket 314 may include a first portion 314a extended from the supporting portion 313 in the radial direction of the outlet 311 or the direction facing away from the cover 320. Additionally, the spark pocket 314 may include a second portion 314b extended forward from the first portion 314a. Additionally, the spark pocket 314 may include a third portion 314c extended from the second portion 314b in the opposite direction of the radial direction of the outlet 311 or the direction facing the cover 320. The first portion 314a, the second portion 314b and the third portion 314c may be integrally formed. The first portion 314a, the second portion 314b and the third portion 314c may face the cover 320. Alternatively, the first portion 314a, the second portion 314b and the third portion 314c may be disposed around the cover 320. The first portion 314a, the second portion 314b and the third portion 314c may have the trapping space 314d inside. The trapping space 314d may be disposed around the cover 320.

When the gas valve 300 is closed, the first portion 314a, the second portion 314b and the third portion 314c may face the second part 324 of the cover 320. Alternatively, the first portion 314a, the second portion 314b and the third portion 314c may be disposed around the second part 324 of the cover 320. Additionally, the trapping space 314d may be disposed around the second part 324 of the cover 320. In this instance, at least part of the trapping space 314d of the spark pocket 314 may be disposed in the flow direction t of the fire debris or the spark S or the tangent direction t of the first part.

When the gas valve 300 is open, the first portion 314a, the second portion 314b and the third portion 314c may face the first part 323 of the cover 320. Alternatively, the first portion 314a, the second portion 314b and the third portion 314c may be disposed around the first part 323 of the cover 320. Additionally, the trapping space 314d may be disposed around the first part 323 of the cover 320. In this instance, at least part of the trapping space 314d of the spark pocket 314 may be disposed in the flow direction t of the fire debris or the spark S or the tangent direction t of the first part.

According to this configuration of the present disclosure, the fire debris and the spark S may be trapped in the trapping space 314d of the spark pocket 314. Accordingly, it is possible to prevent the fire debris and the spark S from going out of the battery module.

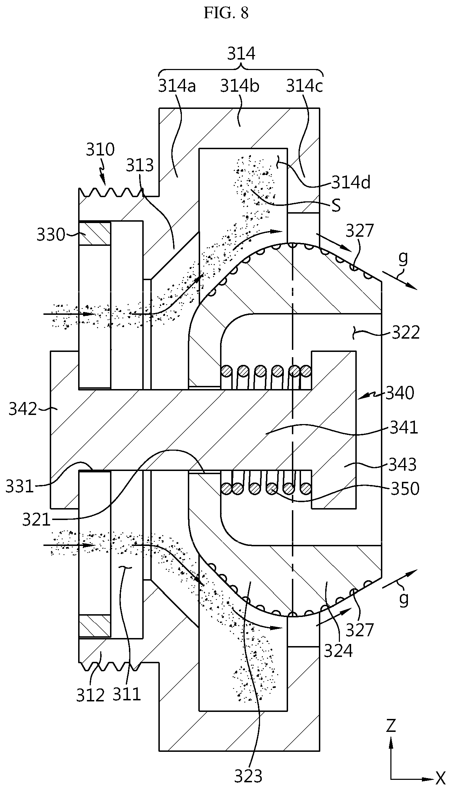

FIG. 8 is a schematic diagram showing another variation of the cover 320 of FIG. 5. Referring to FIG. 8, the first part 323 of the battery module according to the invention has a plurality of grooves 327 on the peripheral surface.

The groove 327 may be also called as a dimple 327. The grooves 327 may be arranged over the outer peripheral surface of the cover 323. The plurality of grooves 327 may be arranged over the first part 323 and the second part 324 of the cover 320.

According to this configuration of the present disclosure, the flow of the venting gas g, the fire debris, the spark S may be less subjected to resistance by the grooves 327. Accordingly, the venting gas g may exit the battery module at a high flow rate. Additionally, the fire debris and the spark S may be trapped quickly. Accordingly, it is possible to ensure the thermal stability of the battery module quickly in case of thermal event.

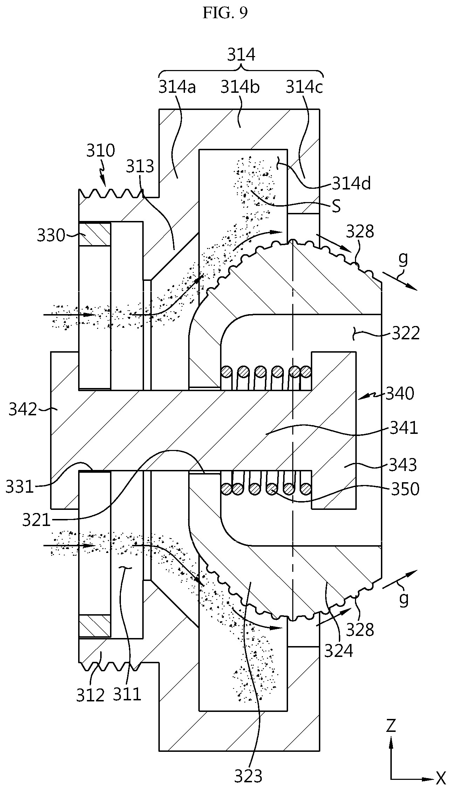

FIG. 9 is a schematic diagram showing another variation of the cover 320 of FIG. 5. Referring to FIG. 9, the first part 323 of the battery module according to the invention has a plurality of protrusions 328 on the peripheral surface.

The protrusions 328 may be arranged over the outer peripheral surface of the cover 320. The plurality of protrusions 328 may be arranged over the first part 323 and the second part 324 of the cover 320.

According to this configuration of the present disclosure, scattering, diffusion, bouncing or collision may occur in the fire debris and the spark S by the protrusions 328. In contrast, the venting gas g may flow over the protrusions 328 or between the protrusions 328. Accordingly, the flow of the venting gas g and the flow of the fire debris and the spark S may be easily separated from each other. Accordingly, it is possible to effectively trap the fire debris and the spark S in the spark pocket 314.

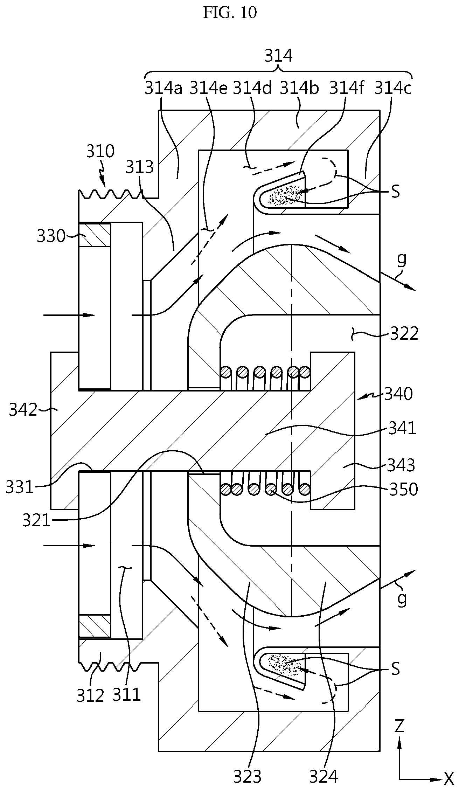

FIG. 10 is a schematic diagram showing a variation of the spark pocket 314 of FIG. 5. Referring to FIG. 10, the spark pocket 314 of the battery module not according to the invention includes a protrusion 314f that protrudes inward.

The spark pocket 314 may have an inlet 314e facing the first part 323 to allow the fire debris or the spark S to enter. The protrusion 314f may be formed, protruded or extended from the third portion 314c in the inward direction of the spark pocket 314. The spark S may flow along the dashed arrow S.

According to this configuration of the present disclosure, the protrusion 314f may prevent the fire debris or the spark S entering the spark pocket 314 from going out of the spark pocket 314.

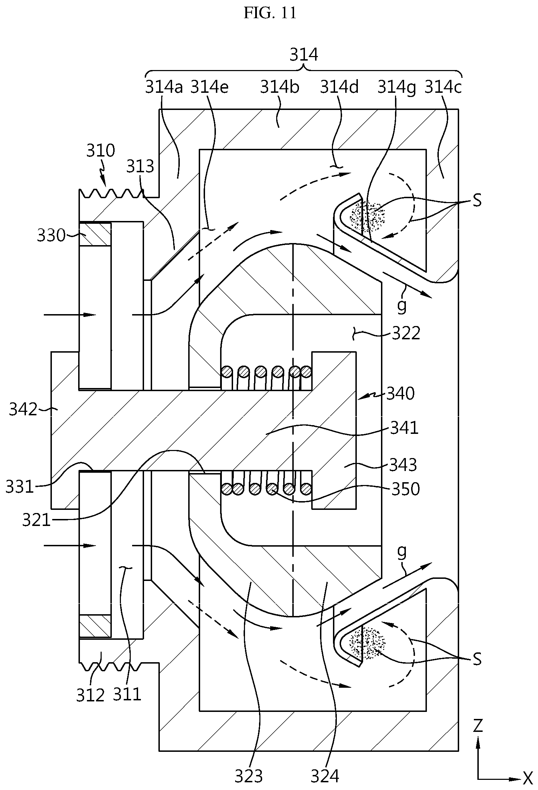

FIG. 11 is a schematic diagram showing another variation of the spark pocket 314 of FIG. 5. Referring to FIG. 11, the spark pocket 314 of the battery module according to an embodiment of the present disclosure may include a protrusion 314g that protrudes inward.

When the gas valve 300 is open, the protrusion 314g may be extended along the outer peripheral surface of the second part 324 of the cover 320 and may be formed, protruded or extended inward of the spark pocket 314. The spark S may flow along the dashed arrow S.

According to this configuration of the present disclosure, the protrusion 314f may effectively prevent the fire debris or the spark S entering the spark pocket 314 from going out of the spark pocket 314.

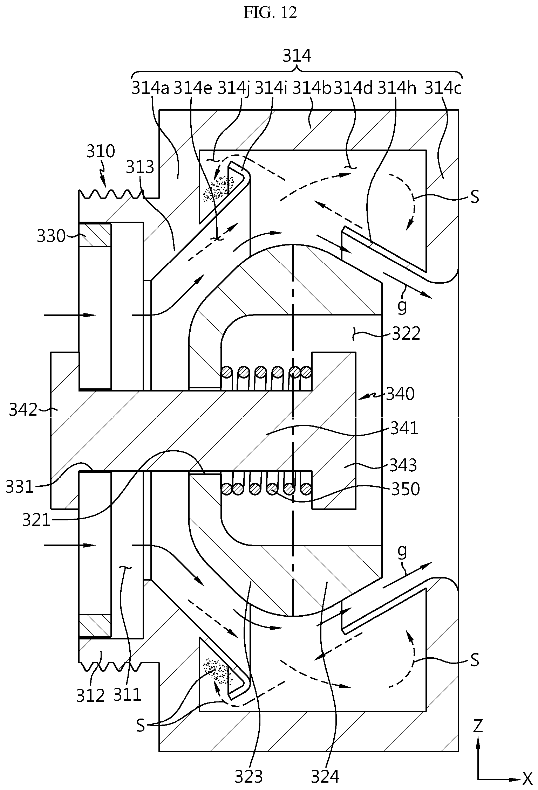

FIG. 12 is a schematic diagram showing another variation of the spark pocket of FIG. 5. Referring to FIG. 12, the spark pocket 314 of the battery module according to an embodiment of the present disclosure may include a first protrusion 314h and a second protrusion 314i that protrude inward.

When the gas valve 300 is open, the first protrusion 314h may be extended along the outer peripheral surface of the second part 324 of the cover 320 and may be formed, protruded or extended inward of the spark pocket 314.

Additionally, the spark pocket 314 may include the second protrusion 314i formed, protruded or extended inward of the spark pocket 314 from the first portion 314a. The second protrusion 314i may provide a second trapping space 314j that is different from the first trapping space 314d.

When the fire debris or the spark S flows very fast, the fire debris or the spark S may collide or bounce off of one another in the spark pocket, and go out of the spark pock. The spark S may flow along the dashed arrow S.

According to this configuration of the present disclosure, even though the fire debris or the spark S collide or bounce off of one another in the spark pocket 314 due to the very high flow rate, the fire debris or the spark S may flow into the second trapping space 314j. The first protrusion 314h may guide the flow of the fire debris or the spark S toward the second trapping space 314j.

Additionally, according to this configuration of the present disclosure, the second protrusion 314i may prevent the fire debris or the spark S entering the first trapping space 314d from going outside.

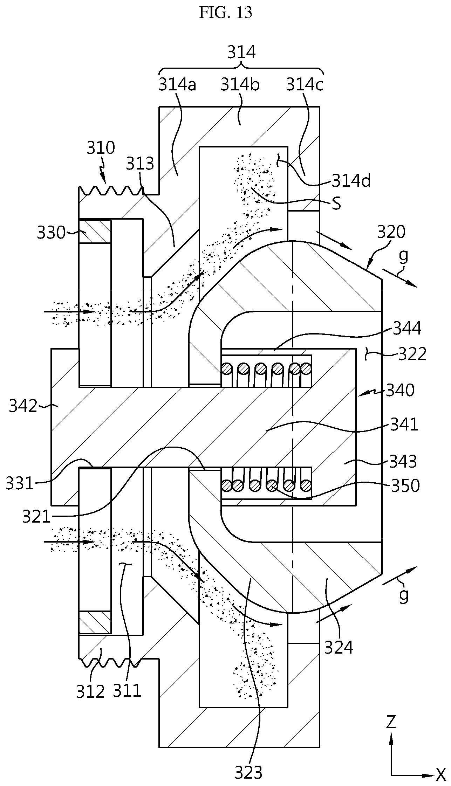

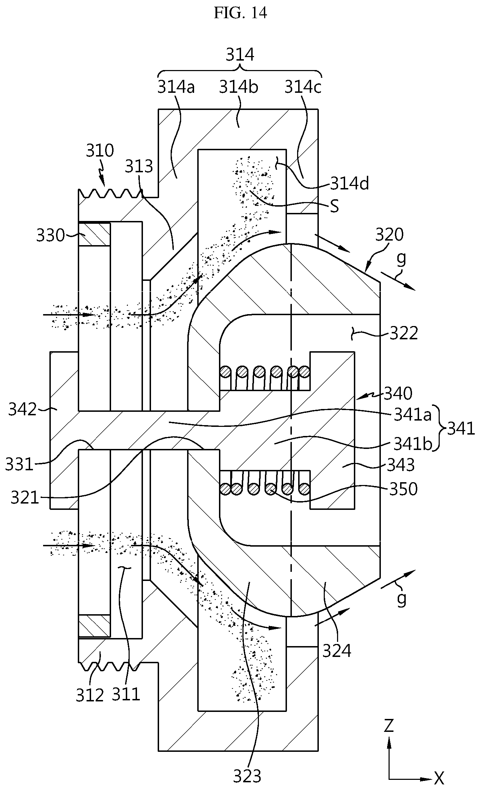

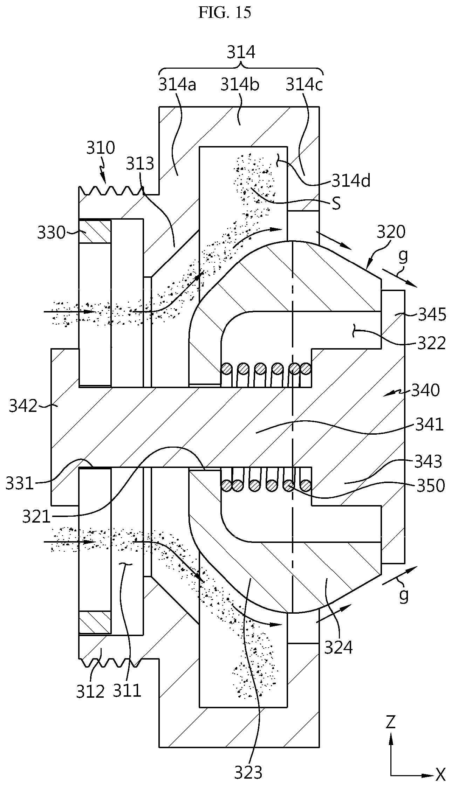

FIG. 13 is a schematic diagram showing a variation of the connection bar 340 of FIG. 5. FIG. 14 is a schematic diagram showing another variation of the connection bar 340 of FIG. 5. FIG. 15 is a schematic diagram showing another variation of the connection bar 340 of FIG. 5. Referring to FIGS. 13 to 15, the battery module according to an embodiment of the present disclosure may include stoppers 341b, 344, 345 to limit the range of forward movement of the cover 320.

Referring to FIG. 13, the first stopper 344 may be extended rearward from the periphery of the second fixing portion 343 of the connection bar 340. The first stopper 344 may be disposed in the internal space 322 of the cover 320. The first stopper 344 may be disposed along the periphery of the second fixing portion 343. The first stopper 344 may be disposed outside of the spring 350. Additionally, the first stopper 344 may be disposed around the spring 350.

When the gas valve 300 is open, the cover 320 may move forward until it contacts the first stopper 344. Alternatively, when the cover 320 moves forward to the maximum extent, the cover 320 may contact the first stopper 344. When the gas valve 300 is closed, the cover 320 may be separated from the first stopper 344.

Referring to FIG. 14, the second stopper 341b may be disposed in the bar 341 of the connection bar 340. The bar 341 may include a first bar 341a that passes through the hole 331 of the supporting portion 330 and the coupling hole 321 of the cover 320 and a second bar 341b that is extended frontward from the first bar 341a and has a larger diameter than the first bar 341a. The second bar 341b may be referred to as the second stopper 341b. The second bar 341b may be disposed between the first bar 341a and the second fixing portion 343.

When the gas valve 300 is open, the cover 320 move forward until it contacts the rear side of the second bar 341b. Alternatively, when the cover 320 moves forward to the maximum extent, the cover 320 may contact the rear side of the second bar 341b. When the gas valve 300 is closed, the cover 320 may be separated from the second bar 341b.

Referring to FIG. 15, the third stopper 345 may be disposed in front of the second fixing portion 343. The third stopper 345 may have a larger diameter than the second fixing portion 343. The diameter of the third stopper 345 may be larger than the diameter of the internal space 322 of the cover 320.

When the gas valve 300 is open, the front side of the second part 324 of the cover 320 may move forward until it contacts the rear side of the third stopper 345. Alternatively, when the cover 320 moves forward to the maximum extent, the front side of the second part 324 of the cover 320 may contact the rear side of the third stopper 345. When the gas valve 300 is closed, the cover 320 may be separated from the third stopper 345.

When the cover 320 moves forward too much without the stoppers 341b, 344, 345, the spark pocket 314 and the cover 320 may be misaligned. Accordingly, the fire debris or the spark S do not enter the spark pocket 314 and may go out of the battery module.

According to this configuration of the present disclosure, it is possible to limit the range of forward movement of the cover 320, and easily align the cover 320 with the spark pocket 314. The stoppers 341b, 344, 345 may limit the position of the cover 320 to induce the flow of the fire debris or the spark S into the spark pocket 314.

A battery pack according to an embodiment of the present disclosure may include the battery module according to the present disclosure. In addition to the battery module, the battery pack according to the present disclosure may further include any other components, for example, components of the battery pack known at the time of filing the patent application, such as BMS, a busbar, a pack case, a relay, a current sensor or the like.

A vehicle according to an embodiment of the present disclosure may include the battery module according to the present disclosure. The battery module according to the present disclosure may be applied to the vehicle such as an electric vehicle or a hybrid electric vehicle. In addition to the battery module, the vehicle according to the present disclosure may further include any other components included in the vehicle V. For example, the vehicle according to the present disclosure may further include a car body, a motor, a control device such as an electronic control unit (ECU) or the like.

The terms indicating directions such as upper, lower, left, right, front and rear are used herein for convenience only, and it should be obvious to those skilled in the art that these terms may change depending on the position of the stated element or an observer.

## Claims

1. A battery module, comprising:
a case (100) which has an opening (121) on a front side and provides an internal space (111);
a battery cell (200) disposed in the internal space (111); and
a gas valve (300) including a seating portion (310) which is installed in the opening and has an outlet (311) and a cover (320) which is movable in a front-rear direction and opens and closes the outlet (311),
wherein the cover (320) includes a first part (323) of which diameter increases in a direction facing away from the outlet (311), **characterized in that** the seating portion includes a spark pocket (314) configured to trap particles moving along a surface of the first part (323),
**characterized in that**:
- the first part (323) has a plurality of grooves (327) on a peripheral surface, or
- the first part (323) has a plurality of protrusions (328) on a peripheral surface.

2. The battery module according to claim 1, wherein the cover (320) includes a second part (324) which is extended forward from the first part (323), and a diameter of the second part decreases in the direction facing away from the outlet (311).

3. A battery pack comprising the battery module according to claim 1 or claim 2.

4. A vehicle comprising the battery module according to claim 1 or claim 2.

## Patentansprüche

1. Batteriemodul, umfassend:
ein Gehäuse (100), welches an einer vorderen Seite eine Öffnung (121) aufweist und welches einen inneren Raum (111) bereitstellt;
eine Batteriezelle (200), welche in dem inneren Raum (111) angeordnet ist; und
ein Gasventil (300), welches einen Aufnahmeabschnitt (310) umfasst, welcher in der Öffnung installiert ist, und welches einen Auslass (311) und eine Abdeckung (320) aufweist, welche in einer Vorne-Hinten-Richtung beweglich ist und welche den Auslass (311) öffnet und schließt,
wobei die Abdeckung (320) einen ersten Teil (323) umfasst, dessen Durchmesser in einer weg von dem Auslass (311) weisenden Richtung zunimmt, **dadurch gekennzeichnet, dass** der Aufnahmeabschnitt eine Funkentasche (314) umfasst, welche dazu eingerichtet ist, Partikel einzufangen, welche sich entlang einer Fläche des ersten Teils (323) bewegen,
**dadurch gekennzeichnet, dass**:
- der erste Teil (323) an einer Umfangsfläche eine Mehrzahl von Nuten (327) aufweist oder
- der erste Teil (323) an einer Umfangsfläche eine Mehrzahl von Vorsprüngen (328) aufweist.

2. Batteriemodul nach Anspruch 1, wobei die Abdeckung (320) einen zweiten Teil (324) umfasst, welcher sich von dem ersten Teil (323) nach vorne erstreckt, und wobei ein Durchmesser des zweiten Teils in der weg von dem Auslass (311) weisenden Richtung abnimmt.

3. Batteriepack, umfassend das Batteriemodul nach Anspruch 1 oder Anspruch 2.

4. Fahrzeug, umfassend das Batteriemodul nach Anspruch 1 oder Anspruch 2.

## Revendications

1. Module de batterie, comprenant :
un boîtier (100) qui a une ouverture (121) sur un côté avant et fournit un espace interne (111) ;
une cellule de batterie (200) disposée dans l'espace interne (111) ; et
une soupape de gaz (300) comportant une partie d'assise (310) qui est installée dans l'ouverture et a une sortie (311) et un couvercle (320) qui est mobile dans une direction avant-arrière et ouvre et ferme la sortie (311),
dans lequel le couvercle (320) comporte une première partie (323) dont le diamètre augmente dans une direction faisant face à l'opposé de la sortie (311), **caractérisé en ce que** la partie d'assise comporte une poche à étincelle (314) configurée pour piéger des particules se déplaçant le long d'une surface de la première partie (323),
**caractérisé en ce que** :
- la première partie (323) a une pluralité de rainures (327) sur une surface périphérique, ou
- la première partie (323) a une pluralité de saillies (328) sur une surface périphérique.

2. Module de batterie selon la revendication 1, dans lequel le couvercle (320) comporte une seconde partie (324) qui s'étend vers l'avant à partir de la première partie (323), et un diamètre de la seconde partie diminue dans la direction faisant face à l'opposé de la sortie (311).

3. Bloc-batterie comprenant le module de batterie selon la revendication 1 ou la revendication 2.

4. Véhicule comprenant le module de batterie selon la revendication 1 ou la revendication 2.
